# EUROPEAN PATENT APPLICATION

(11) **EP 4 600 636 A1**
(43) Date of publication of application: **13.08.2025**
(21) Application number: 22965208.6
(22) Date of filing: 11.11.2022
(51) Int. Cl.: G01N 22/02

(54) **OBJECT SEE-THROUGH SCANNING DEVICE AND OBJECT SEE-THROUGH SCANNING METHOD**

(71) Applicant: MITSUBISHI ELECTRIC CORPORATION, Chiyoda-ku Tokyo 100-8310 (JP)
(72) Inventor: ISHIOKA, Kazuaki, Tokyo 100-8310 (JP)
(74) Representative: Pfenning, Meinig & Partner mbB
(86) International application number: PCT/JP2022/042085
(87) International publication number: WO 2024/100884

(57) **Abstract**

A see-through object-scanning device (100) includes a transmission unit (101) that transmits, to a target object (T), a transmission radio wave obtained by iteratively performing frequency sweeps each to change a frequency from a first frequency to a second frequency over a frequency sweep time, a reception unit (102) that receives, using array antenna elements, a reception radio wave resulting from reflection of the transmission radio wave on the target object (T), a three-dimensional image generation unit (8) that generates a three-dimensional image every single one of the frequency sweeps, from a reception signal of a corresponding one of the array antenna elements, and an object detection unit (9) that detects an object on a basis of multiple three-dimensional images. The see-through object-scanning device (100) changes at least one of the first frequency, the second frequency, the frequency sweep time, or the number of ones of the array antenna elements to be used in detection of an object, in a time division manner.

## Description

### Field

The present disclosure relates to a see-through object-scanning device and a see-through object-scanning method each for seeing through an object using a radio wave.

### Background

A device that sees through an object to detect a foreign matter or a dangerous article is used in applications such as foreign matter detection in food inspection and a security gate at an airport. A conventional see-through object-scanning device typically uses an X-ray. A see-through object-scanning device using an X-ray has a problem of X-ray exposure, and has therefore a limited use. As a method that presents no exposure problem, a see-through object-scanning device that uses nuclear magnetic resonance is in practical use for medical use. However, a see-through object-scanning device that uses nuclear magnetic resonance requires a strong magnetic field, thereby resulting in a large device size, and causing a great force under existence of a magnetic material such as iron. Thus, a see-through object-scanning device that uses nuclear magnetic resonance requires a large space for device installation, and has a significant limitation on the place for installing the device such as necessity for control of entering and leaving by persons and things of the place where the device is installed. The use thereof is therefore limited.

In contrast, a see-through object-scanning device that uses a radio wave presents no problem of radiation exposure, and has less limitation on the place for installing the device. When a radio wave is used, a resolution limit is limited by the wavelength of the radio wave used. This has conventionally resulted in a low resolution of a see-through object-scanning image obtained using a radio wave, thereby making identification of an object difficult. With the recent progress of device technology, it is becoming practicable to use a radio wave having a frequency of 100 GHz or higher, and an increase in the resolution is thus expected. For example, Patent Literature 1 discloses a device for checking for a defect inside a tire using a microwave.

### Citation List

### Patent Literature

Patent Literature 1: Japanese Patent Application Laid-open No. 2018-77192

### Summary

### Technical Problem

However, according to the foregoing conventional technology, there is a problem in which a movement of the detection target will reduce detection accuracy.

The present disclosure has been made in view of the foregoing, and it is an object of the present disclosure to provide a see-through object-scanning device capable of reducing or preventing a decrease in detection accuracy even when the detection target moves.

### Solution to Problem

In order to solve the above-described problems and achieve the object, a see-through object-scanning device according to the present disclosure includes: a transmission unit to transmit a transmission radio wave to a target object, the transmission radio wave obtained by iteratively performing frequency sweeps each to change a frequency from a first frequency to a second frequency over a frequency sweep time; a reception unit to receive a reception radio wave using array antenna elements, the reception radio wave resulting from reflection of the transmission radio wave on the target object; a three-dimensional image generation unit to generate a three-dimensional image every single one of the frequency sweeps, from a reception signal of a corresponding one of the array antenna elements; and an object detection unit to detect an object on a basis of multiple ones of the three-dimensional image. The see-through object-scanning device changes at least one of the first frequency, the second frequency, the frequency sweep time, or a number of ones of the array antenna elements to be used in detection of an object, in a time division manner.

### Advantageous Effects of Invention

A see-through object-scanning device according to the present disclosure provides an advantage in capability of reducing or preventing a decrease in detection accuracy even when the detection target moves.

### Brief Description of Drawings

FIG. 1 is a diagram illustrating a configuration of a see-through object-scanning device according to a first embodiment.
FIG. 2 is a diagram illustrating a first example of waveform of a transmission radio wave.
FIG. 3 is a diagram illustrating a second example of waveform of the transmission radio wave.
FIG. 4 is a diagram illustrating a configuration of the transmitter illustrated in FIG. 1.
FIG. 5 is a diagram illustrating a configuration of the receivers illustrated in FIG. 1.
FIG. 6 is a diagram illustrating a configuration of the analog parallel-to-serial conversion unit illustrated in FIG. 1.

### Description of Embodiment

A see-through object-scanning device and a see-through object-scanning method according to an embodiment of the present disclosure will be described in detail below with reference to the drawings.

### First Embodiment.

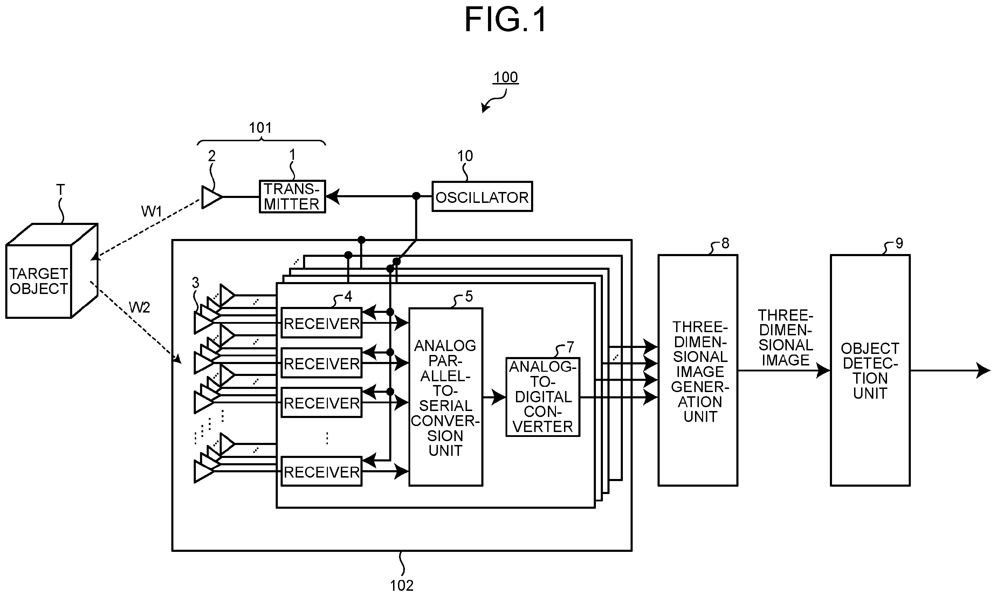

FIG. 1 is a diagram illustrating a configuration of a see-through object-scanning device 100 according to a first embodiment. The see-through object-scanning device 100 has a function to see through an object using a radio wave. The see-through object-scanning device 100 is used for purposes such as, for example, detection of a dangerous article such as a weapon at an airport, and detection of a foreign matter mixed in a product at a production site.

The see-through object-scanning device 100 includes a transmitter 1, a transmission antenna 2, reception antennas 3, receivers 4, an analog parallel-to-serial conversion unit 5, an analog-to-digital converter 7, a three-dimensional image generation unit 8, an object detection unit 9, and an oscillator 10. The transmitter 1 and the transmission antenna 2 are collectively referred to herein as transmission unit 101. The reception antennas 3, the receivers 4, the analog parallel-to-serial conversion unit 5, and the analog-to-digital converter 7 are collectively referred to herein as reception unit 102.

The transmitter 1 generates a transmission radio wave W1 to be transmitted toward a target object T, and transmits the transmission radio wave W1 generated, using the transmission antenna 2. The waveform of the transmission radio wave W1 will next be described. The transmitter 1 generates the transmission radio wave W1 having a waveform obtained by iteratively performing frequency sweeps each to change the frequency thereof from a first frequency to a second frequency. The time length required to change a frequency from the first frequency to the second frequency is referred to herein as frequency sweep time. The transmitter 1 is capable of changing, in a time division manner, at least one of the first frequency, the second frequency, and the frequency sweep time, which are frequency sweep parameters.

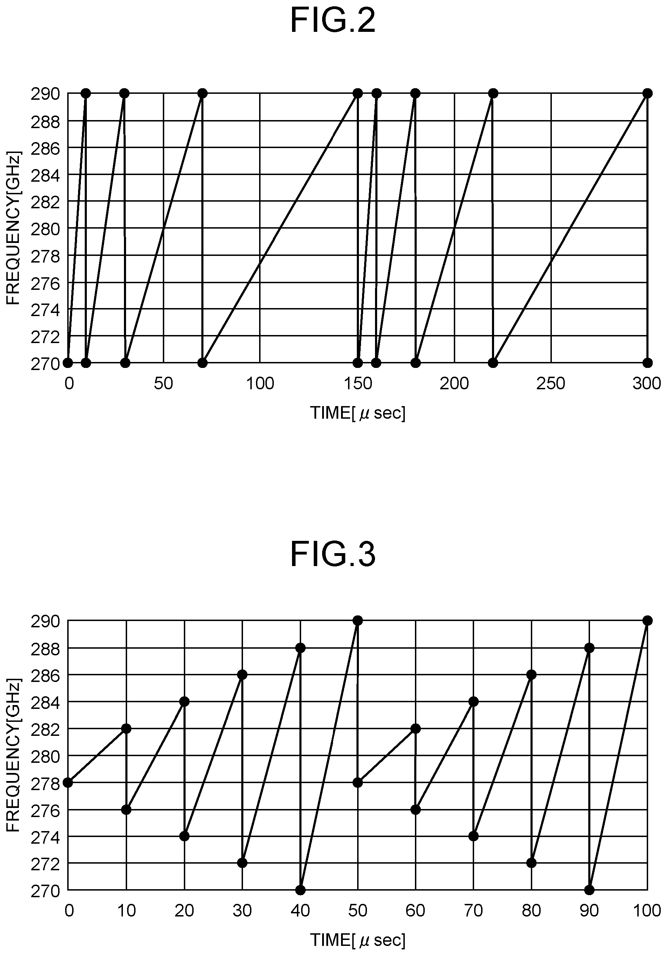

FIG. 2 is a diagram illustrating a first example of waveform of the transmission radio wave W1. In the first example illustrated in FIG. 2, the first frequency is 270 GHz, and the second frequency is 290 GHz. The first frequency and the second frequency have fixed values, whereas the frequency sweep time is changed every single frequency sweep. The frequency sweep time is 10 microseconds (µsec) in the first frequency sweep. The frequency sweep time is 20 µsec in the second frequency sweep. The frequency sweep time is 40 µsec in the third frequency sweep. The frequency sweep time is 80 µsec in the fourth frequency sweep. In addition, the frequency sweep time is 10 µsec in the fifth frequency sweep. The frequency sweep time is 20 µsec in the sixth frequency sweep. The frequency sweep time is 40 µsec in the seventh frequency sweep. The frequency sweep time is 80 µsec in the eighth frequency sweep.

FIG. 3 is a diagram illustrating a second example of waveform of the transmission radio wave W1. In the second example illustrated in FIG. 3, the frequency sweep time has a constant value of 10 µsec, whereas the first frequency and the second frequency are changed every single frequency sweep. The first frequency is 278 GHz and the second frequency is 282 GHz in the first frequency sweep. The first frequency is 276 GHz and the second frequency is 284 GHz in the second frequency sweep. The first frequency is 274 GHz and the second frequency is 286 GHz in the third frequency sweep. The first frequency is 272 GHz and the second frequency is 288 GHz in the fourth frequency sweep. The first frequency is 270 GHz and the second frequency is 290 GHz in the fifth frequency sweep. In addition, the first frequency is 278 GHz and the second frequency is 282 GHz in the sixth frequency sweep. The first frequency is 276 GHz and the second frequency is 284 GHz in the seventh frequency sweep. The first frequency is 274 GHz and the second frequency is 286 GHz in the eighth frequency sweep. The first frequency is 272 GHz and the second frequency is 288 GHz in the ninth frequency sweep. The first frequency is 270 GHz and the second frequency is 290 GHz in the tenth frequency sweep.

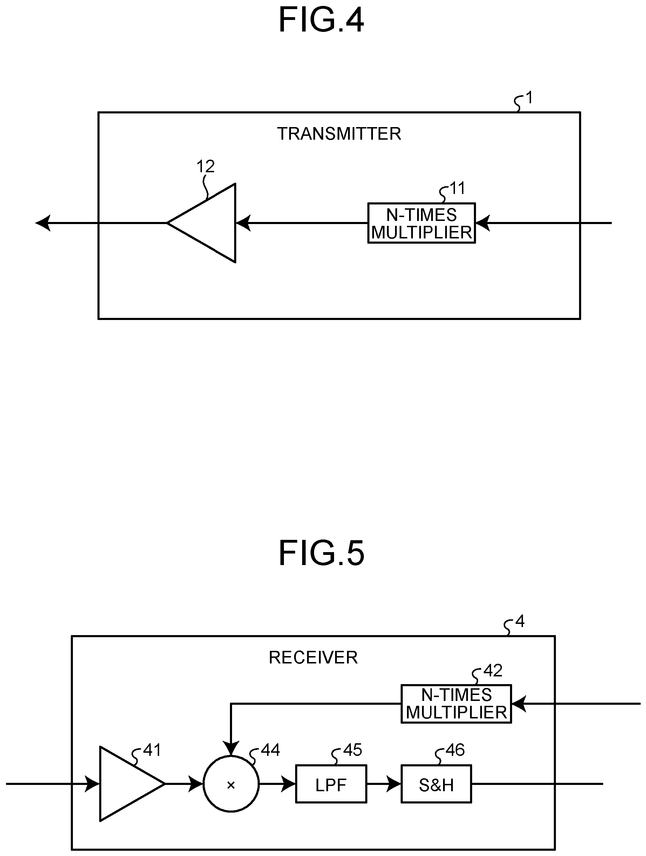

FIG. 4 is a diagram illustrating a configuration of the transmitter 1 illustrated in FIG. 1. The transmitter 1 receives a signal having a constant envelope from the oscillator 10. The transmitter 1 includes an N-times multiplier 11 and a transmission amplifier 12. The transmitter 1 multiplies the frequency of the signal having a constant envelope input from the oscillator 10 by N using the N-times multiplier 11. The oscillator 10 accordingly generates a signal having a frequency that is one Nth of the frequency of the transmission radio wave W1. An output of the N-times multiplier 11 is amplified by the transmission amplifier 12, and the transmission radio wave W1 is emitted by the transmission antenna 2.

Returning to the description with reference to FIG. 1, the reception antennas 3 receive a reception radio wave W2, which is a radio wave resulting from reflection of the transmission radio wave W1 transmitted by the transmission unit 101 on the target object T. The reception antennas 3 are array antenna elements arranged to form a two-dimensional array.

The receivers 4 are provided correspondingly to the respective reception antennas 3, and each have a function to process the analog signal of the radio wave received by the corresponding one of the reception antennas 3. The receivers 4 each output an analog signal obtained by processing, to the analog parallel-to-serial conversion unit 5.

FIG. 5 is a diagram illustrating a configuration of each of the receivers 4 illustrated in FIG. 1. Each of the receivers 4 receives a signal having a constant envelope from the oscillator 10, and receives an analog signal of a radio wave received from a corresponding one of the reception antennas 3. Each of the receivers 4 includes a reception amplifier 41, an N-times multiplier 42, a frequency mixer 44, a low-pass filter (LPF) 45, and a sample-and-hold element 46, which is indicated as "S&H" in the figure.

The analog signal input from a corresponding one of the reception antennas 3 is amplified by the reception amplifier 41, and a resulting signal is then input to the frequency mixer 44. In addition, the frequency of the signal having a constant envelope input from the oscillator 10 is multiplied by N by the N-times multiplier 42, and the signal having the frequency multiplied by N is also input to the frequency mixer 44. The frequency mixer 44 mixes together, and down-converts, the signals respectively input from the reception amplifier 41 and the N-times multiplier 42, and outputs a resulting signal to the LPF 45.

The LPF 45 is a filter with a variable cut-off bandwidth. The LPF 45 cuts off signal components having frequencies higher than or equal to a frequency that has been set to remove unnecessary high frequency components, and outputs a resulting signal to the sample-and-hold element 46. The sample-and-hold element 46 samples and holds the analog signal. The sample-and-hold operation is simultaneously performed by all the receivers 4. The output of the sample-and-hold element 46 is connected to the analog parallel-to-serial conversion unit 5.

Returning to the description with reference to FIG. 1, the analog signals sampled and held by the multiple respective receivers 4 are converted into a serial analog signal in the analog parallel-to-serial conversion unit 5. The serial analog signal is output to the analog-to-digital converter 7.

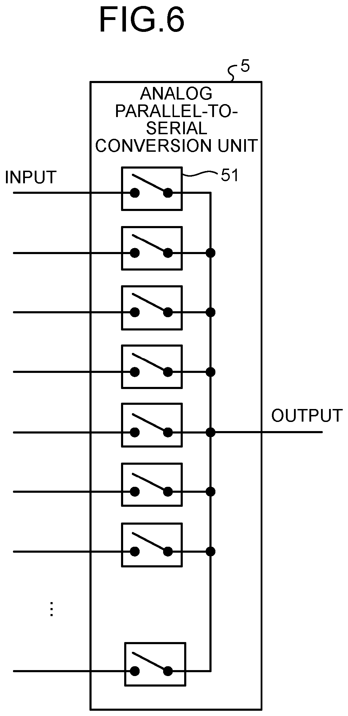

FIG. 6 is a diagram illustrating a configuration of the analog parallel-to-serial conversion unit 5 illustrated in FIG. 1. The analog parallel-to-serial conversion unit 5 includes multiple analog switches 51. The analog parallel-to-serial conversion unit 5 is capable of selecting a signal to be output by the reception unit 102 to the three-dimensional image generation unit 8, i.e., a signal for use in generation of a three-dimensional image and in detection of an object, by turning on one of the analog switches 51. Thus, the array antenna element of the reception antenna 3 connected to the analog switch 51 that is in an ON state can be designated as the array antenna element to be used in detection of an object. Note that only one of the multiple analog switches 51 is turned on at one time. The analog parallel-to-serial conversion unit 5 can perform parallel-to-serial conversion by sequentially changing the analog switch 51 to be turned on. In addition, the analog parallel-to-serial conversion unit 5 can change the array antenna element to be used, by changing the switching pattern of the analog switches 51, that is, by changing the conversion pattern for use in the parallel-to-serial conversion. The analog parallel-to-serial conversion unit 5 can change the number of array antenna elements to be used in detection of an object on a per-frequency sweep basis, by changing the conversion pattern for use in the parallel-to-serial conversion in a time division manner at timing synchronized with the frequency sweeps of the transmission radio wave W1. Note that the analog parallel-to-serial conversion unit 5 does not necessarily need to turn on all the analog switches 51. The analog parallel-to-serial conversion unit 5 can limit the number of array antenna elements to be used, by changing the conversion pattern for use in the parallel-to-serial conversion to limit the number of the analog switches 51 to be turned on. For example, the analog parallel-to-serial conversion unit 5 can reduce the number of array antenna elements to be used to a greater degree for a wider frequency sweep range.

The analog-to-digital converter 7 converts the serial analog signal output by the analog parallel-to-serial conversion unit 5 into a digital signal, and outputs the digital signal obtained by conversion to the three-dimensional image generation unit 8. As described above, use of the analog parallel-to-serial conversion unit 5 causes the multiple analog signals received by the multiple array antenna elements to be converted into a serial analog signal by parallel-to-serial conversion. This enables the reception unit 102 to include merely one analog-to-digital converter 7. In addition, the analog parallel-to-serial conversion unit 5 can reduce the bandwidth used by the analog-to-digital converter 7 by limiting the number of array antenna elements to be used. When the see-through object-scanning device 100 sees through a moving target object T such as in a case of, for example, a walk-through security gate, the reception unit 102 needs to process a large amount of data at high speed, thereby requiring a very high-speed analog-to-digital converter 7. This will lead to a high cost. The use of the analog parallel-to-serial conversion unit 5 in the reception unit 102 enables the number of analog-to-digital converters 7 to be reduced, and the bandwidth used by the analog-to-digital converter 7 to be reduced. This can reduce overall cost of the see-through object-scanning device 100.

The three-dimensional image generation unit 8 generates a three-dimensional image every single frequency sweep, from the digital signal output by the reception unit 102. The three-dimensional image generation unit 8 outputs the three-dimensional image generated, to the object detection unit 9.

The object detection unit 9 detects an object on the basis of multiple three-dimensional images output from the three-dimensional image generation unit 8. The object to be detected by the object detection unit 9 is a preset type of object such as, for example, a foreign matter or a weapon. The object detection unit 9 includes a neural network or the like to allow a preset object to be detected using a learned model that has previously learned about objects to be detected. When an object is to be detected using neural network, the object detection unit 9 inputs multiple three-dimensional images to the learned model. The learned model then outputs a detection result representing whether the target object T includes a preset type of object to be detected such as, for example, a foreign matter or a weapon. When a preset object is detected, the detection result may include, for example, the type of the detected object.

As described above, the see-through object-scanning device 100 according to the first embodiment includes the transmission unit 101, which transmits, to the target object T, the transmission radio wave W1, which has been obtained by iteratively performing frequency sweeps each to change the frequency from the first frequency to the second frequency over the frequency sweep time; the reception unit 102, which receives, using array antenna elements, the reception radio wave W2, which has resulted from reflection of the transmission radio wave W1 on the target object T; the three-dimensional image generation unit 8, which generates a three-dimensional image every single frequency sweep, from reception signals of the array antenna elements; and the object detection unit 9, which detects an object on the basis of multiple three-dimensional images. The see-through object-scanning device 100 changes at least one of the first frequency, the second frequency, the frequency sweep time, and the number of array antenna elements to be used in detection of an object, in a time division manner.

Changing at least one of the first frequency, the second frequency, and the frequency sweep time enables the frequency sweep speed to be changed. Changing the first frequency or the second frequency enables the frequency sweep range to be changed. When the first frequency and the second frequency are each fixed, a shorter frequency sweep time leads to a higher frequency sweep speed. Alternatively, when the frequency sweep time is fixed, a wider frequency sweep range leads to a higher frequency sweep speed. Use of a high frequency sweep speed allows a decrease in image quality of an obtainable three-dimensional image to be reduced or prevented even when the target object T moves. A wide frequency sweep range causing a high frequency sweep speed will however cause the outputs of the receivers 4 to have a broad bandwidth. In this case, reduction of the number of array antenna elements to be used in detection of an object can reduce the bandwidth used by the analog-to-digital converter 7, but reduction of the number of array antenna elements to be used in detection of an object causes a decrease in angular resolution. In addition, when the frequency sweep speed is increased by reduction of the frequency sweep time, distance resolution will decrease. Thus, changing at least one of the first frequency, the second frequency, the frequency sweep time, and the number of array antenna elements to be used in detection of an object, in a time division manner, enables multiple three-dimensional images having different levels of distance resolution and angular resolution to be obtained, and detection of an object using such three-dimensional images in combination enables reduction or prevention of decrease in detection accuracy even when the target object T moves.

In the first embodiment, the waveform illustrated in FIG. 2 and the waveform illustrated in FIG. 3 are presented as examples of the waveform of the transmission radio wave W1. Thus, when the transmission radio wave W1 having the waveform illustrated in FIG. 2 is used, the transmission unit 101 changes the frequency sweep time in a time division manner, and the reception unit 102 changes the number of array antenna elements to be used in detection of an object, in a time division manner. Alternatively, when the transmission radio wave W1 having the waveform illustrated in FIG. 3 is used, the transmission unit 101 changes the first frequency and the second frequency in a time division manner, and the reception unit 102 changes the number of array antenna elements to be used in detection of an object, in a time division manner. However, these operations are merely by way of example. It is satisfactory that the see-through object-scanning device 100 changes at least one parameter in a time division manner among the first frequency, the second frequency, the frequency sweep time, and the array antenna elements to be used in detection of an object. In addition, although the first embodiment has been described in which the at least one parameter described above is changed every single frequency sweep, the at least one parameter may be changed every unit of frequency sweeps instead of every frequency sweep, that is, the at least one parameter described above may be changed every multiple frequency sweeps.

In addition, in the see-through object-scanning device 100, the reception unit 102 includes multiple array antenna elements, performs parallel-to-serial conversion on multiple analog signals from the respective array antenna elements, and converts a resulting analog signal into a digital signal using the single analog-to-digital converter 7. This enables the number of analog-to-digital converters 7 to be reduced, and cost of the see-through object-scanning device 100 to be reduced.

Moreover, the see-through object-scanning device 100 can limit the number of array antenna elements to be used in detection of an object by changing the conversion pattern for use in parallel-to-serial conversion. This enables the angular resolution used in object detection to be changed.

Furthermore, the see-through object-scanning device 100 can change the number of array antenna elements to be used, by changing the conversion pattern for use in parallel-to-serial conversion in a time division manner at timing synchronized with the frequency sweeps. This enables the angular resolution used in object detection to be changed for each three-dimensional image.

In addition, the object detection unit 9 is capable of detecting an object using neural network.

Moreover, the see-through object-scanning device 100 can reduce the number of array antenna elements to be used in detection of an object to a greater degree for a larger difference between the first frequency and the second frequency. This enables the bandwidth used by the analog-to-digital converter 7 to be reduced by reducing the number of array antenna elements to be used in detection of an object even when the frequency sweep range is wide causing the outputs of the receivers 4 to have a broad bandwidth.

Note that components of the see-through object-scanning device 100 can be implemented using processing circuitry. The processing circuitry may be implemented by a dedicated hardware element or by a control circuit using a central processing unit (CPU).

When the foregoing processing circuitry is implemented by a dedicated hardware element, the processing circuitry is a single circuit, a set of multiple circuits, a programmed processor, a parallel programmed processor, an application specific integrated circuit (ASIC), a field programmable gate array (FPGA), or a combination thereof.

When the foregoing processing circuitry is implemented by a control circuit using a CPU, this control circuit includes, for example, a processor and a memory. The processor is a CPU, which is also known as a computing unit, a microprocessor, a microcomputer, a digital signal processor (DSP), and the like. The memory is, for example, a non-volatile or volatile semiconductor memory such as a random access memory (RAM), a read-only memory (ROM), a flash memory, an erasable programmable ROM (EPROM), or an electrically erasable programmable ROM (EEPROM) (registered trademark); a magnetic disk, a flexible disk, an optical disk, a compact disc, a MiniDisc, a digital versatile disk (DVD), or the like.

When the foregoing processing circuitry is implemented by a control circuit, components of the see-through object-scanning device 100 are implemented in such a manner that the processor reads and executes a program stored in the memory, corresponding to processing of each of the components. The memory is also used as a temporary memory for each processing performed by the processor.

The configurations described in the foregoing embodiment are merely examples. These configurations can be combined with another known technology, and part of such configurations can be omitted and/or modified without departing from the spirit.

### Reference Signs List

1 transmitter; 2 transmission antenna; 3 reception antenna; 4 receiver; 5 analog parallel-to-serial conversion unit; 7 analog-to-digital converter; 8 three-dimensional image generation unit; 9 object detection unit; 10 oscillator; 11, 42 N-times multiplier; 12 transmission amplifier; 41 reception amplifier; 44 frequency mixer; 45 LPF; 46 sample-and-hold element; 51 analog switch; 100 see-through object-scanning device; 101 transmission unit; 102 reception unit; T target object; W1 transmission radio wave; W2 reception radio wave.

## Claims

1. A see-through object-scanning device comprising:
a transmission unit to transmit a transmission radio wave to a target object, the transmission radio wave obtained by iteratively performing frequency sweeps each to change a frequency from a first frequency to a second frequency over a frequency sweep time;
a reception unit to receive a reception radio wave using array antenna elements, the reception radio wave resulting from reflection of the transmission radio wave on the target object;
a three-dimensional image generation unit to generate a three-dimensional image every single one of the frequency sweeps, from a reception signal of a corresponding one of the array antenna elements; and
an object detection unit to detect an object on a basis of multiple ones of the three-dimensional image, wherein
the see-through object-scanning device changes at least one of the first frequency, the second frequency, the frequency sweep time, or a number of ones of the array antenna elements to be used in detection of an object, in a time division manner.

2. The see-through object-scanning device according to claim 1, wherein
the reception unit
comprises the plurality of array antenna elements, performs parallel-to-serial conversion on a plurality of analog signals from the respective array antenna elements, and converts a resulting signal into a digital signal using a single analog-to-digital converter.

3. The see-through object-scanning device according to claim 2, wherein
the see-through object-scanning device limits the number of the ones of the array antenna elements to be used in detection of an object, by changing a conversion pattern for use in the parallel-to-serial conversion.

4. The see-through object-scanning device according to claim 2, wherein
the see-through object-scanning device changes, for each of the frequency sweeps, the number of the ones of the array antenna elements to be used in detection of an object, by changing a conversion pattern for use in the parallel-to-serial conversion in a time division manner at timing synchronized with a corresponding one of the frequency sweeps.

5. The see-through object-scanning device according to any one of claims 1 to 4, wherein
the object detection unit detects an object using neural network.

6. The see-through object-scanning device according to claim 1, wherein
the see-through object-scanning device reduces the number of the ones of the array antenna elements to be used in detection of an object to a greater degree for a larger difference between the first frequency and the second frequency.

7. A see-through object-scanning method comprising:
a step of transmitting a transmission radio wave to a target object, the transmission radio wave obtained by iteratively performing frequency sweeps each to change a frequency from a first frequency to a second frequency over a frequency sweep time;
a step of receiving a reception radio wave using array antenna elements, the reception radio wave resulting from reflection of the transmission radio wave on the target object;
a step of generating a three-dimensional image every single one of the frequency sweeps, from a reception signal of a corresponding one of the array antenna elements; and
a step of detecting an object on a basis of multiple ones of the three-dimensional image, wherein
at least one of the first frequency, the second frequency, the frequency sweep time, or a number of ones of the array antenna elements to be used in detection of an object is changed in a time division manner.
